# EUROPEAN PATENT SPECIFICATION

(11) **EP 0 571 894 B1**
(45) Date of publication and mention of the grant of the patent: **14.08.1996**
(21) Application number: 93108214.3
(22) Date of filing: 19.05.1993
(51) Int. Cl.: F02B 27/02

(54) **A variable-geometry induction system for the internal combustion engine of a vehicle**
Ansaugsystem mit verstellbarer Geometrie für die Brennkraftmaschine eines Fahrzeuges
Système d'admission à géométrie variable pour le moteur à combustion interne d'un véhicule

(30) Priority: 26.05.1992 IT TO920447
(43) Date of publication of application: 01.12.1993
(73) Proprietor: FERRARI S.p.A., I-41100 Modena (IT)
(72) Inventor: Martinelli, Paolo, I-41100 Modena (IT)
(74) Representative: Plebani, Rinaldo

(56) References cited:
- EP-A- 0 382 596
- EP-A- 0 483 581
- DE-A- 4 018 612

## Description

The present invention relates to a variable-geometry induction system for an internal combustion engine, particularly for the high-performance engine of a GT car.

Induction systems for internal combustion engines are known - and used above all for the engines of high-performance vehicles such as GT cars - in which the air-induction pipe includes elements, known as "trumpets", which are so constructed that the ratios of their lengths to their diameters can be varied.

It is known that, by optimizing this in dependence on the running condition of the engine, it is possible to obtain, within certain limits, an increase in available power from the engine for a particular speed of rotation, this increase being due to the creation of conditions of resonance in the induction pipe which increase the positive-displacement of the engine.

In order to vary the ratio between the length and diameter of the induction trumpets, a technique is currently used whereby the trumpets end in a telescopic pipe portion defined by two coaxial elements movable one within the other; adjustment of the relative axial positions of the two movable elements alters the physical length of the pipe portion which therefore provides a variable contribution to the total length of the trumpet; this results in a variation in the ratio of the length (which may be increased or decreased) to the diameter (which remains constant) and hence in the aerodynamic characteristics of the trumpet.

It is also known from EP-A-0382596 to use, for each cylinder, two induction pipes, of appropriately optimized length and diameter, arranged parallel to each other and connected at their ends by a manifold housing a butterfly-valve; by controlling the butterfly valve it is possible to use only one of the two pipes or both together, thereby changing the "equivalent diameter" of the resultant induction pipe and therefore obtaining conditions of resonance for a certain number of different running conditions of the engine. Finally, EP-A-0483581 shows an induction pipe having a portion of variable-geometry, able to modify its diameter by means of a plurality of circumferential sections connected by hinges.

The systems described above have the disadvantage of being relatively bulky; the first and third systems, with telescopic trumpets, or variable diameter sections are also relatively delicate as regards mechanical control; above all, finally, the last system has very serious sealing problems. The object of the present invention is to provide a variable-geometry induction system that enables the engine intake to be optimized by obtaining conditions of resonance in the system for various running conditions and which, at the same time, is imply and robustly constructed and ensures a high degree of reliability and a very good gas-tight.

On the basis, the present invention provides a variable-geometry induction system for the internal combustion engine of a vehicle, of the type described in Claim 1.

In order to provide a better understanding of the invention, there follows a non-limitative description of one embodiment, given by way of example, with reference to the appended drawings, in which:
Figure 1 is a schematic, sectioned, side elevation of a variable-geometry induction system according to the invention for the internal combustion engine of a vehicle;
Figure 2 is a partial side elevation, on an enlarged scale, of the induction system of Figure 1; and
Figure 3 is a cartesian graph schematically showing the same portions of two different curves characteristic of an internal combustion engine fitted with the variable-geometry induction system according to the invention.

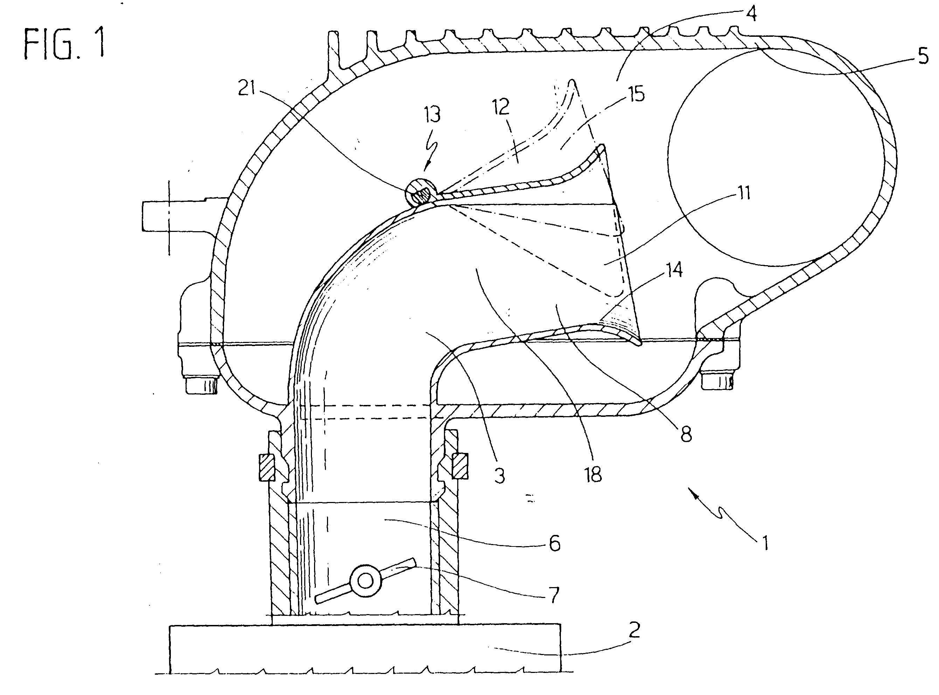

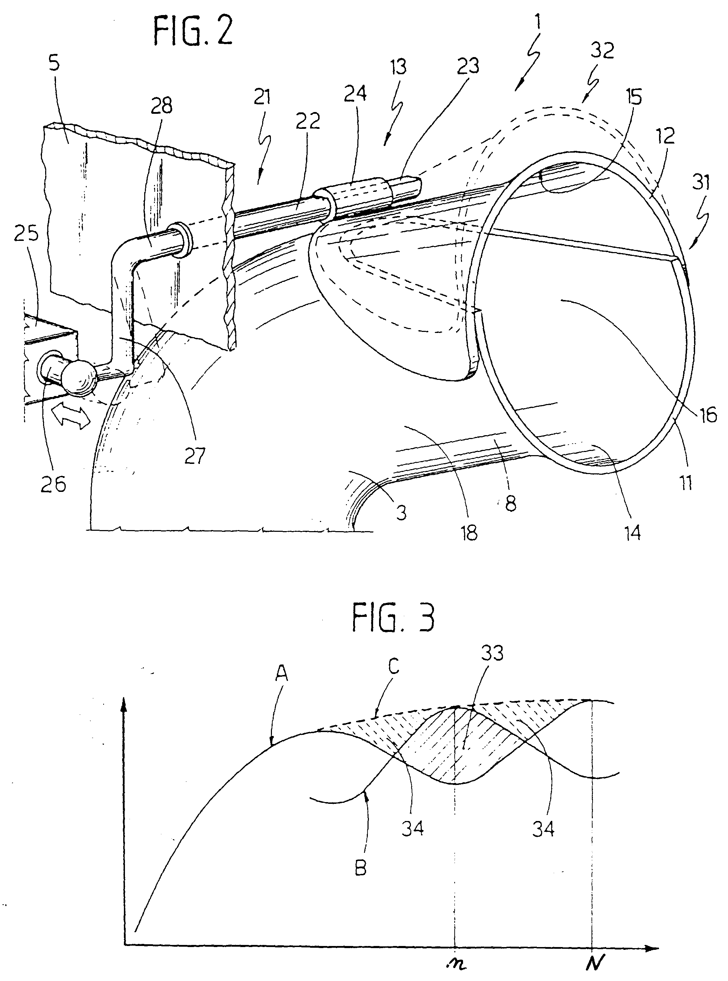

With reference to Figures 1 and 2, a variable-geometry induction system 1 for the internal combustion engine of a vehicle (both known and not shown in the appended drawings for the sake of simplicity) includes, for each cylinder 2 (only one of which is illustrated), an induction trumpet 3; the trumpets 3 are arranged in a resonance chamber 4 positioned substantially over the cylinders 2 of the internal combustion engine and defined by a casing 5; the ambient air is drawn into the cylinders 2 through the chamber 4 and the trumpets 3. To be precise, each trumpet 3 is mounted at the upper end of an induction pipe 6 which opens into the cylinder 2 and hausing a butterfly-valve 7 for regulating the air flow into the cylinder 2 itself.

According to the present invention, the induction trumpet 3 has a variable-geometry mouth portion 8 including a first fixed lobe 11 and a second lobe 12 movable relative to the fixed lobe 11 and attached by a hinge to the rest of the mouth portion 8.

The fixed lobe 11, which is substantially semicylindrical in shape, is formed integrally with the trumpet 3 and is defined by a lower end portion 14 of the mouth portion 8 of the trumpet 3 itself, with its concave surface facing upwardly.

The movable lobe 12, on the other hand, is defined by a semi-cylindrical cap 15 which is fitted over the fixed lobe 11 with its edges overlapping, to close an upper opening 16 defined by the fixed lobe 11. The opening 16 faces the concave surface of the lobe 12 which, together with the fixed lobe 11, defines a pipe portion 18 with a continuous outline.

According to the invention, with particular reference to Figure 2, the induction system 1 is also provided with control means 21 for moving the movable lobe 12, in this case a shaft 22 supported by the casing 5 of the resonance chamber 4 and fixed at a first end 23 in a tube 24 for rotation therewith, the tube 24 being fixed in turn to the outside of the movable lobe 12; the shaft 22 is preferably controlled by an actuator 25, for example a pneumatic actuator, arranged outside the resonance chamber 4 and in this case connected by means of a rod 26 and a crank 27 to a second end 28 of the shaft 22, opposite the end 23 and projecting from the casing 5 through a fluid-tight seal.

In use, according to the speed of rotation of the engine, the pneumatic actuator 25 pivots the movable lobe 12 away from or towards the fixed lobe 11 by means of the shaft 22, the rod 26 and the crank 27, selectively positioning the lobe 12 either in the position shown in the drawing by an unbroken line 31 or in that shown by a broken line 32. The inlet cross-section of the pipe portion 18 is thereby varied, altering the ratio between the length and the diameter of the pipe itself.

In this way, as shown in Figure 3, it is possible to increase the torque delivered by the engine at a particular speed of rotation.

In particular, when the lobe 12 is in the position 32 shown by a broken line in Figure 2, the characteristic curve of the engine is that indicated A in Figure 3, where the condition of resonance in the induction system 1 is achieved at a speed of rotation N corresponding to delivery of the maximum torque. However, this characteristic curve also indicates a condition of antiresonance (at a speed of rotation n) which causes a reduction in intake and therefore a fall in the drive torque and in power.

On the other hand, when the lobe 12 is in the position 31, indicated by an unbroken line in Figure 2, the trumpet 3 has a reduced inlet diameter and hence the resonance condition in the induction system 1 is displaced, occurring at the speed of rotation n for example; the corresponding characteristic curve therefore becomes that indicated B in Figure 3 which has, of course, a point of antiresonance at the speed of rotation N.

Therefore, use of the actuator 25 to place the lobe 12 in the position 31 at the speed n or, on the other hand, in the position 32 at the speed N, gives a characteristic curve which is the sum of the curves A and B, with a resulting gain in power at the speed of rotation n which is proportional to the hatched area 33 in Figure 3.

In this way an engine provided with the induction system 1 according to the invention will have an optimum characteristic curve both at the speed of rotation n and at the speed of rotation N and therefore has no power interruptions during acceleration.

On the basis of this description it is finally clear that, instead of using an actuator 25 of ON-OFF type, it is possible to use an actuator 25 which enables the position of the movable lobe 12 to be adjusted in a continuous manner from the closed position 31 to the position 32 of maximum opening in dependence on the variation in the speed of rotation of the engine; in this way it is possible to obtain a complex characteristic curve which is the upper envelope of the family of curves of type B between two peaks of the curve A and schematically indicated at C in Figure 3; such control of the movable cap 12 would provide a considerable increase in the available drive torque with a consequent increase in the power supplied by the engine, represented by the areas 34 indicated by broken hatching.

The advantages provided by the present invention are clear from the above description: the provision of a variable-geometry induction system, by using a movable lobe in the mouth portion of the induction trumpet, considerably simplifies manufacture besides permitting continuous adjustment of the length-diameter ratio of the induction trumpet and thereby optimizing the drive torque in a continuous manner over a broad range of running conditions of the engine.

## Claims

1. A variable-geometry induction system (1) for an internal combustion engine of a vehicle, of the type including, for each cylinder (2) of the engine, at least one trumpet (3) at the top of an induction pipe (6) opening into the cylinder (2), a variable-geometry portion including at least one pair of elements (11, 12) movable one relative to the other so as to vary the diameter of the said portion ; characterised in that said variable-geometry portion consists of the mouth portion (8) of said trumpet (3), said mouth portion (8) comprising a first lobe (11) and a second lobe (12), of substantially semi-cylindrical shape, fixed together by a hinge so that their edges overlap to form a pipe portion (18) with a continuous outline, the diameter of which is variable according to the mutual divergence of the two lobes (11, 12).

2. A variable-geometry induction system according to Claim 1, characterised in that the first lobe (11) is fixed and formed integrally with the trumpet (3), being defined by a lower end portion (14) of the mouth portion (8) of the trumpet (3) itself with its concave surface facing upwardly; and in that the second lobe (12) is movable, is hinged to the trumpet (3) over the fixed lobe (11) and is defined by a semi-cylindrical cap (15) fitted over the fixed lobe (11) with its edges overlapping so as to close the upper opening (16) defined by the fixed lobe (11), the opening (16) facing the concave surface of the movable lobe (12) in such a way that the lobes (11, 12) always define together a closed perimeter of the continuous-outline pipe portion (18).

3. A variable-geometry induction system (1) according to Claim **2**, characterised in that the trumpet (3) is arranged inside a resonance chamber (4) defined by a casing (5) which communicates with the outside and is arranged over the cylinders (2) of the internal combustion engine.

4. A variable-geometry induction system (1) according to Claim **3**, characterised in that it includes control means (21) for moving the movable lobe (12), the control means including in turn a shaft (22) sealably supported by a casing (5) defining the resonance chamber (4), the shaft being fixed for rotation with the movable lobe (12).

5. A variable-geometry induction system (1) according to Claim **4**, characterised in that the shaft (22) is controlled by an actuator (25) arranged outside the resonance chamber (4).

6. A variable-geometry induction system (1), according to Claim 4 or Claim 5, characterised in that the control means (21) for moving the movable lobe (12) are operable to pivot the lobes (11, 12) apart so as to widen the cross-section of the mouth portion (8) of the trumpet (3) as the speed of rotation of the engine increases; on the other hand the control means (21) are operable to pivot the movable lobe (12) closer to the fixed lobe (11) so as to reduce the said cross-section of the mouth portion (8) as the speed of rotation of the internal combustion engine decreases.

## Patentansprüche

1. Ansaugsystem (1) mit verstellbarer Geometrie für einen Verbrennungsmotor eines Fahrzeugs der Art, die für jeden Zylinder (2) des Motors mindestens einen Trichter (3) an der Oberseite eines Ansaugrohrs (6) aufweist, das sich in den Zylinder (2) öffnet, wobei ein Abschnitt mit verstellbarer Geometrie mindestens ein Paar Elemente (11, 12) aufweist, von denen eines gegenüber dem anderen beweglich ist, um so den Durchmesser des Abschnitts zu verändern; dadurch gekennzeichnet, daß der Abschnitt mit verstellbarer Geometrie aus dem Mündungsabschnitt (8) des Trichters (3) besteht, wobei der Mündungsabschnitt (8) ein erstes Segment (11) und ein zweites Segment (12) mit im wesentlichen halbzylindrischer Form aufweist, die durch ein Gelenk so aneinander befestigt sind, daß sich ihre Kanten überlappen, um einen Rohrabschnitt (18) mit stetiger Kontur zu bilden, dessen Durchmesser entsprechend der gegenseitigen Divergenz der beiden Segmente (11, 12) verstellbar ist.

2. Ansaugsystem mit verstellbarer Geometrie nach Anspruch 1, dadurch gekennzeichnet, daß das erste Segment (11) feststehend und in einem Stück mit dem Trichter (3) geformt ist, wobei es durch einen unteren Endabschnitt (14) des Mündungsabschnitts (8) des Trichters (3) selbst gebildet ist und seine konkave Oberfläche nach oben weist; und dadurch, daß das zweite Segment (12) beweglich ist, gelenkig mit dem Trichter (3) über dem feststehenden Segment (11) verbunden und durch eine halbzylindrische Kappe gebildet ist, die über das feststehende Segment (11) mit ihren Kanten überlappend aufgepaßt ist, um so die durch das feststehende Segment (11) gebildete obere Öffnung (16) zu verschließen, wobei die Öffnung (16) zu der konkaven Oberfläche des beweglichen Segments (12) so weist, daß die Segmente (11, 12) stets gemeinsam eine geschlossene Begrenzung des Rohrabschnitts (18) mit stetiger Kontur bilden.

3. Ansaugsystem (1) mit verstellbarer Geometrie nach Anspruch 2, dadurch gekennzeichnet, daß der Trichter (3) innen in einer Resonanzkammer (4) angeordnet ist, die durch ein Gehäuse (5) gebildet ist, das mit dem Äußeren in Verbindung steht und über den Zylindern (2) des Verbrennungsmotors angeordnet ist.

4. Ansaugsystem (1) mit verstellbarer Geometrie nach Anspruch 3, dadurch gekennzeichnet, daß es eine Steuereinrichtung (21) zum Bewegen des beweglichen Segments (12) aufweist, wobei die Steuereinrichtung ihrerseits eine Welle (22) aufweist, die abdichtend durch ein die Resonanzkammer (4) bildendes Gehäuse (5) gestützt wird, wobei die Welle zur Drehung mit dem beweglichen Segment (12) befestigt ist.

5. Ansaugsystem (1) mit verstellbarer Geometrie nach Anspruch 4, dadurch gekennzeichnet, daß die Welle (22) durch ein außerhalb der Resonanzkammer (4) angeordnetes Stellglied (25) gesteuert wird.

6. Ansaugsystem (1) mit verstellbarer Geometrie nach Anspruch 4 oder 5, dadurch gekennzeichnet, daß die Steuereinrichtung (21) zum Bewegen des beweglichen Segments (12) zum Auseinanderschwenken der Segmente (11, 12) betrieben werden kann, um so den Querschnitt des Mündungsabschnitts (8) des Trichters (3) mit zunehmender Drehzahl des Motors zu erweitern; andererseits die Steuereinrichtung (21) zum Schwenken des beweglichen Segments (12) näher zu dem feststehenden Segment (11) betrieben werden kann, um so den Querschnitt des Mündungsabschnitts (8) mit sinkender Drehzahl des Verbrennungsmotors zu verringern.

## Revendications

1. Système d'admission à géométrie variable (1) pour un moteur à combustion interne de véhicule, du type comprenant, pour chaque cylindre (2) du moteur, au moins une trompette (3) au sommet d'un conduit d'admission (6) débouchant dans le cylindre (2), une partie à géométrie variable comprenant au moins une paire d'éléments (11, 12) pouvant être déplacés l'un par rapport à l'autre de façon à faire varier le diamètre de ladite partie, caractérisé en ce que ladite partie à géométrie variable est constituée de la partie de bouche (8) de ladite trompette (3), ladite partie de bouche (8) comprenant un premier lobe (11) et un second lobe (12), de forme sensiblement semi-cylindrique, reliés l'un à l'autre par une articulation de façon que leurs bords se recouvrent afin de former une partie de conduit (18) à contour continu, dont le diamètre varie en fonction de l'écartement mutuel des deux lobes (11, 12).

2. Système d'admission à géométrie variable selon la revendication 1, caractérisé en ce que le premier lobe (11) est fixe et formé de façon intégrale avec la trompette (3), en étant défini par une partie d'extrémité inférieure (14) de la partie de bouche (8) de la trompette (3) elle-même, avec sa surface concave orientée vers le haut, et en ce que le second lobe (12) est mobile, est articulé sur la trompette (3) au-dessus du lobe fixe (11) et est défini par un chapeau semi-cylindrique (15) ajusté par-dessus le lobe fixe (11) avec ses bords en recouvrement de manière à fermer l'ouverture supérieure (16) définie par le lobe fixe (11), l'ouverture (16) faisant face à la surface concave du lobe mobile (12) de telle manière que les lobes (11, 12) définissent toujours ensemble un périmètre fermé de la partie de conduit (18) à contour continu.

3. Système d'admission à géométrie variable (1) selon la revendication 2, caractérisé en ce que la trompette (3) est disposée à l'intérieur d'une chambre de résonance (4) définie par un carter (5) qui communique avec l'extérieur et est disposé au-dessus des cylindres (2) du moteur à combustion interne.

4. Système d'admission à géométrie variable (1) selon la revendication 3, caractérisé en ce qu'il comprend des moyens de commande (21) destinés à déplacer le lobe mobile (12), les moyens de commande comprenant à leur tour une tige (22) supportée de façon étanche par un carter (5) définissant la chambre de résonance (4), la tige étant fixée pour tourner avec le lobe mobile (12).

5. Système d'admission à géométrie variable (1) selon la revendication 4, caractérisé en ce que la tige (22) est commandée par un actionneur (25) disposé à l'extérieur de la chambre de résonance (4).

6. Système d'admission à géométrie variable (1), selon la revendication 4 ou la revendication 5, caractérisé en ce que les moyens de commande (21) destinés à déplacer le lobe mobile (12) peuvent être mis en oeuvre pour faire pivoter les lobes (11, 12) à l'écart l'un de l'autre de manière à élargir la section transversale de la partie de bouche (8) de la trompette (3) lorsque la vitesse de rotation du moteur s'accroît, et en ce que, par ailleurs, les moyens de commande (21) peuvent être mis en oeuvre pour faire pivoter le lobe mobile (12) et le rapprocher du lobe fixe (11) de manière à réduire ladite section transversale de la partie de bouche (8) lorsque la vitesse de rotation du moteur à combustion interne décroît.
